# EUROPEAN PATENT SPECIFICATION

(11) **EP 0 926 050 B1**
(45) Date of publication and mention of the grant of the patent: **22.10.2003**
(21) Application number: 98124051.8
(22) Date of filing: 17.12.1998
(51) Int. Cl.: B62D 25/06, B62D 25/04

(54) **A frame for vehicles, in particular motor vehicles**
Rahmen für Fahrzeuge , insbesondere Kraftfahrzeuge
Chassis pour véhicule, notamment véhicules automobiles

(30) Priority: 19.12.1997 IT TO970246 U
(43) Date of publication of application: 30.06.1999
(73) Proprietor: FIAT AUTO S.p.A., 10135 Torino (IT)
(72) Inventor: Demaria, Claudio, 14018 Villafranca d'Asti (IT)
(74) Representative: Franzolin, Luigi

(56) References cited:
- DE-C- 706 784
- US-A- 1 844 965
- US-A- 2 390 193

## Description

The present invention relates to a frame for vehicles, and in particular for motor vehicles, of the type comprising a floor pan, one or more pairs of pillars extending upwardly from the floor pan, and at least one pair of longitudinal stringers fixedly connected at the upper ends of the pillars, normally by welding.

In known frames of the above-described type, after the welding operation the pillar and the stringer themselves define between them a longitudinal groove communicating with the outside, in each of the regions where the pillar and the associated stringer are joined; the groove is normally filled with a bead of sealing material which confers on the junction a particular aesthetic value and, at the same time, avoids the ingress into the groove of contaminants and/or external agents which could further corrode the weld region and compromise the effectiveness of the weld itself over time.

The joining and finishing method described above, although widely utilised, is not completely satisfactory in that after relatively short time periods some beads, and in particular those disposed in the most greatly stressed regions, tend to disengage partially from the associated grooves generating for the entire vehicle problems essentially of an aesthetic nature, and problems of strength for the frame in that the external agents are retained within the groove by the said bead and therefore exercise, on the weld zones, a constant corrosion action.

DE 706 784C, which shows the features of the preamble of claim 1, discloses a frame comprising an upper stringer and a pillar, which are connected to one another and define between them an outer longitudinal groove completely filled with welding material.

The object of the present invention is that of providing a frame for vehicles which will be free from the above-explained disadvantages.

According to the present invention there is provided a frame for vehicles, in particular motor vehicles, according to claim 1.

The invention will now be described with reference to the attached drawings which illustrate a non-limitative embodiment thereof, in which:
Figure 1 is a perspective view of a preferred embodiment of the vehicle frame of the present invention;
Figure 2 illustrates, in section and on an enlarged scale, an intermediate portion of the frame of Figure 1; and
Figure 3 is a drawing similar to Figure 2 and illustrates an attachment element of an optional device coupled to the vehicle frame.

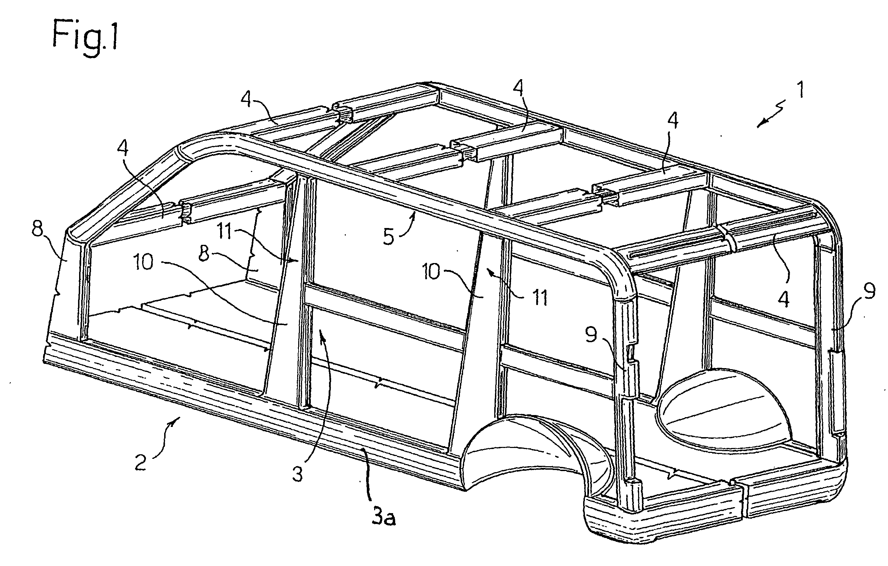

In Figure 1 the reference numeral 1 generally indicates a frame of a vehicle, comprising two side frames 3, and a plurality of cross beams 4 fixedly connecting the side frames 3 together. Each side frame 3 comprises a lower stringer 3a and a tubular upper stringer 5, which, in the particular example described, in turn comprises a visible outer section 6 and an inner section 7 both preferably shaped by forming and fixedly connected together to define the associated stringer 5.

Each upper stringer 5 is fixedly connected to the associated lower stringer 3a by means of two end pillars 8 and 9 and, in the particular example described, also by means of a pair of visible intermediate pillars 10.

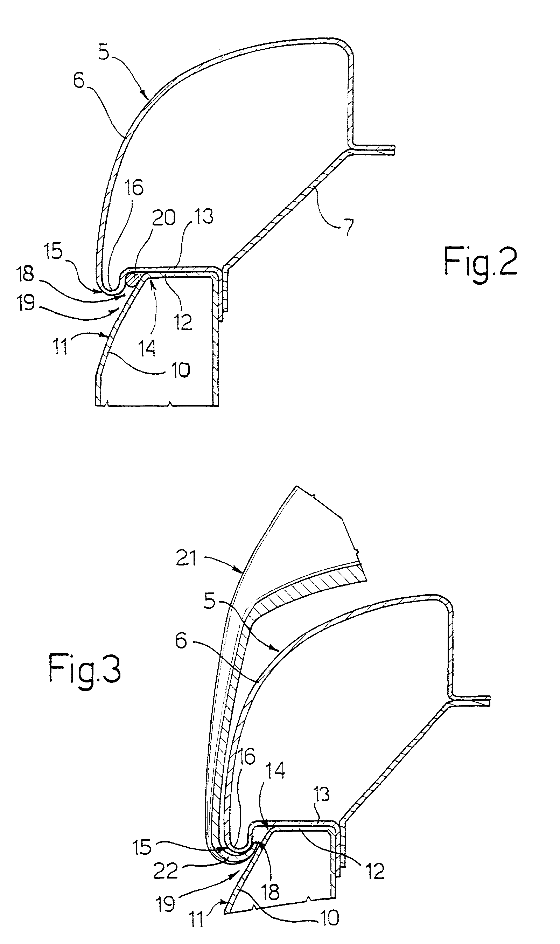

The intermediate pillars 10 are delimited laterally by respective visible outer surfaces 11 and, upwardly, by respective walls 12 each of which constitutes a support for an intermediate portion 13 of the associated outer section 6 (Figure 2).

The wall 12 of each pillar 10 and the portion 13 of the corresponding outer section 6 are fixedly connected together by welding, and together define a longitudinal side groove 14 (Figures 2 and 3) which extends rearwardly and in a position facing a longitudinal projection 15 of the associated upper stringer 5. In particular, each projection 15 is defined by an intermediate shaped portion 16 of the outer section 6 of the associated stringer 5, and extends towards the associated lower stringer 3a in a position partially facing the associated side surface 11 and transversely spaced from the associated side surface 11 itself. The portions 12 and 13 of one intermediate pillar 10 define, together with a part of the outer surface 11 of the pillar 10 itself and the projection 15, a cavity 18 which has an aperture 19 facing downwardly and not visible to a person observing the frame 1 from the side.

As illustrated in Figure 2, the cavity 18 is partially filled with a known sealing material 20 disposed in contact with the projection 15 and maintained within the groove 14 by the projection 15 itself. Alternatively, as illustrated in Figure 3, there is no sealing material or filling provided within the interior of the cavity 18.

Still with reference to Figure 3, each projection 15 further constitutes a fixed anchorage for an attachment element of an optional support device and/or cover generally indicated 21, disposed above the stringers 5 and having, for each pillar 10, a hook element 22 which surrounds the associated projection 15 and extends partially into the cavity 18.

From the above it will be apparent that, with respect to known frames, the constructional characteristics of the frame 1 described and, in particular, the presence of the projections 15 formed directly by a forming process of the associated sections 6 above, all allow a series of problems of a predominantly aesthetic nature to be resolved in an extremely simple and economic manner in that all the junctions between the intermediate pillars 10 and the upper stringers 5 are screened by the projections 15 and are therefore no longer visible from the outside. The particular geometry and disposition of the projections 15 also makes it possible to make any possible sealing material 20 which may be used invisible from outside, which, when present, lies completely behind the projections 15 and is maintained in engagement with the associated grooves 14 by the projections 15 themselves.

The presence of the projections 15 also contributes to maintaining the original strength characteristic of the frame 1 unchanged over time in that the welding regions are constantly protected by these projections 15 as well as by the sealing material 20, which is not able to move within the cavities 18.

A fully acceptable protection of the welding zones is achieved, however, even if only the projections 15 are provided, in that the entrances 19 of the cavities 18 delimiting these projections 15 face downwardly and, therefore, water or other elements which could attack the weld regions find it difficult to penetrate into the cavities 18 themselves and, in any case, are not able to remain within the cavities 18 once they have entered.

The possibility of eliminating the conventional adhesive materials obviously translates into a simplification of the forming process of the frame 1, and into a consequent reduction both in the construction times and costs.

The simplification of the frame 1 is, moreover, increased by the fact that these projections 15, as well as performing a covering and retaining function, define a series of elements for anchorage of accessories to the roof of the vehicle, such as, for example, roof racks, raised roofs or deflectors.

From the above it is apparent that the frame 1 described can have modifications and variations introduced thereto which do not depart from the field of protection of the present invention as defined by the claims. In particular, the upper stringers 5 and the projections 15 themselves can be shaped in a different manner from that described by way of example.

## Claims

1. A frame (1) for vehicles, in particular motor vehicles, comprising two longitudinal side frames (3) and for each side frame (3) a visible upper stringer (5) and at least one visible pillar (10) fixedly connected to one another and defining between them an outer longitudinal groove (14); said pillar (10) being delimited by a visible outer lateral surface (11); said upper stringer (5) being provided with a longitudinal screening projection (15) lying in a position facing the said longitudinal groove (14) and at least partly facing said lateral surface (11); **characterised in that** the said screen projection (15) lies in a position transversely offset from the said lateral surface (11) and partially delimits a cavity (18) communicating with the outside through a downwardly facing inlet aperture (19).

2. A frame according to Claim 1, **characterised in that** the said screening projection (15) is integral with the said upper stringer (5).

3. A frame according to Claim 1 or Claim 2, **characterised in that** the said screening projection (15) is defined by a portion (16) of the said upper stringer (5).

4. A frame according to Claim 3, **characterised in that** the said upper stringer (5) comprises a first section (6) and at least one second section (7) fixedly connected together, the said screening projection (15) constituting an intermediate portion (16) of one (6) of the said sections (6, 7).

5. A frame according to any one of the preceding Claims, **characterised in that** the said cavity (18) receives a bead (20) of sealing material disposed in contact against the said sealing projection (15).

## Patentansprüche

1. Ein Rahmen (1) für Fahrzeuge, insbesondere für Motorfahrzeuge, umfassend zwei Längsseitenrahmen (3) und für jeden Seitenrahmen (3) einen sichtbaren oberen Längsversteifungsträger (5) und wenigstens eine sichtbare Säule (10), welche fest miteinander verbunden sind und zwischen sich eine äußere Längskerbe (14) ausbilden; die gesagte Säule (10) wird durch eine sichtbare äußere seitliche Oberfläche (11) begrenzt; der gesagte obere Längsversteifungsträger (5) ist mit einem Längsabschirmungsvorsprung (15) versehen, welcher in einer Position liegt, die der gesagten Längskerbe (14) gegenübersteht und die wenigstens teilweise der gesagten Längsoberfläche (11) gegenübersteht; **dadurch gekennzeichnet, dass** der Abschirmungsvorsprung (15) in einer Position quer versetzt von der gesagten seitlichen Oberfläche (11) liegt und teilweise einen Hohlraum (18) begrenzt, welcher mit der Außenseite durch eine nach unten ausgerichtete Einlassöffnung (19) in Verbindung steht.

2. Ein Rahmen gemäß Anspruch 1, **dadurch gekennzeichnet, dass** der gesagte Abschirmungsvorsprung (15) integral mit dem gesagten oberen Längsversteifungsträger (5) ist.

3. Ein Rahmen gemäß Anspruch 1 oder Anspruch 2, **dadurch gekennzeichnet, dass** der gesagte Abschirmungsvorsprung (15) durch einen Bereich (16) des gesagten oberen Längsversteifungsträgers (5) gebildet wird.

4. Ein Rahmen gemäß Anspruch 3, **dadurch gekennzeichnet, dass** der gesagte obere Längsversteifungsträger (5) einen ersten Abschnitt (6) und wenigstens einen zweiten Abschnitt (7) umfasst, welche fest miteinander verbunden sind, wobei der gesagte Abschirmungsvorsprung (15) einen Mittelbereich (16) von einem (6) der gesagten Abschnitte (6, 7) ausbildet.

5. Ein Rahmen gemäß einem der vorhergehenden Ansprüche, **dadurch gekennzeichnet, dass** der gesagte Hohlraum (18) eine Wulst (20) eines Dichtmaterials aufnimmt, welches in Kontakt gegen den gesagten Abdichtungsvorsprung (15) angeordnet ist.

## Revendications

1. Châssis (1) pour véhicules, notamment véhicules automobiles, comportant deux châssis latéraux longitudinaux (3) et, pour chaque châssis latéral (3), une poutre supérieure visible (5) et au moins un pilier visible (10) connectés de manière fixe l'un à l'autre et définissant entre eux une gorge longitudinale extérieure (14) ; ledit pilier (10) étant délimité par une surface latérale extérieure visible (11) ; ladite poutre supérieure (5) étant munie d'une saillie de masquage longitudinale (15) se trouvant dans une position en vis-à-vis de ladite gorge longitudinale (14) et au moins partiellement en vis-à-vis de ladite surface latérale (11) ; **caractérisé en ce que** ladite saillie de masquage (15) se trouve dans une position décalée transversalement par rapport à ladite surface latérale (11) et délimite partiellement une cavité (18) communiquant avec l'extérieur à travers une ouverture d'entrée dirigée vers le bas (19).

2. Châssis selon la revendication 1, **caractérisé en ce que** ladite saillie de masquage (15) est d'un seul bloc avec ladite poutre supérieure (5).

3. Châssis selon la revendication 1 ou la revendication 2, **caractérisé en ce que** ladite saillie de masquage (15) est définie par une partie (16) de ladite poutre supérieure (5).

4. Châssis selon la revendication 3, **caractérisé en ce que** ladite poutre supérieure (5) comporte un premier tronçon (6) et au moins un second tronçon (7) connectés ensemble de manière fixe, ladite saillie de masquage (15) constituant une partie intermédiaire (16) de l'un desdits tronçons (6, 7).

5. Châssis selon l'une quelconque revendications précédentes, **caractérisé en ce que** ladite cavité (18) reçoit un cordon de matériau d'étanchéité disposé en contact contre ladite saillie de d'étanchéité (15).
